Europäisches Patentamt

European Patent Office

Office européen des brevets

(11) Veröffentlichungsnummer: **0 212 620**
**B1**

(12) EUROPÄISCHE PATENTSCHRIFT

(45) Veröffentlichungstag der Patentschrift:
15.02.89

(21) Anmeldenummer: 86111456.9

(22) Anmeldetag: 19.08.86

(51) Int. Cl.⁴: **B23K 26/00**

(54) **Maschine zum Verschweissen von Längsrändern gerundeter Dosenzargen.**

(30) Priorität: 21.08.85 CH 3595/85

(43) Veröffentlichungstag der Anmeldung:
04.03.87 Patentblatt 87/10

(45) Bekanntmachung des Hinweises auf die Patenterteilung:
15.02.89 Patentblatt 89/7

(84) Benannte Vertragsstaaten:
CH DE FR GB IT LI NL

(56) Entgegenhaltungen:
EP-A- 0 092 519

(73) Patentinhaber: ELPATRONIC AG, Baarerstrasse 117,
CH-6300 Zug(CH)

(72) Erfinder: Weil, Wolfgang, Hattsteinstrasse 3,
D-7843 Heitersheim(DE)

(74) Vertreter: Hotz, Klaus, Dipl.-El.-Ing. / ETH, c/o
SOUDRONIC AG Industriestrasse 35 Postfach 11,
CH-8962 Bergdietikon(CH)

## Beschreibung

Die Erfindung betrifft eine Maschine zum Verschweissen von Längsrändern gerundeter Dosenzargen, mit
– zwei endlos biegsamen Försträngen, die parallel zueinander über ein Paar Antriebsräder, eine Umlenkvorrichtung und eine Förderstrecke für die Zargen laufen,
– Mitnehmern, die an je einem der Förderstränge in gleichen Abständen hintereinander so befestigt sind, dass jedem Mitnehmer an einem Försterang ein Mitnehmer an dem anderen Försterang gegenüberliegt, damit diese beiden zusammengehörigen Mitnehmer gemeinsam eine Dosenzarge über die Förderstrecke schieben, und
– einer Schweissvorrichtung an der Förderstrecke.

Maschinen dieser Gattung sind beispielsweise aus der CH-A 519 371, der CH-A 621 499 und der EP-A 0 143 450 bekannt. Die Förderstränge sind üblicherweise von Laschenketten oder Stahlbändern gebildet und werden über eine Kupplung angetrieben, die es ermöglicht, die Förderstränge in Förderrichtung gegeneinander zu verstellen, damit die Mitnehmer beider Förderstränge einander paarweise in je einer Ebene gegenüberliegen, die sich genau im rechten Winkel zu beiden Försträngen erstreckt. Nur wenn diese Lage der paarweise zusammengehörigen Mitnehmer eingehalten wird, lässt sich erreichen, dass die Längsränder der Dosenzargen genau aneinanderliegend, also nicht in Längsrichtung gegeneinander versetzt, miteinander verschweisst werden. Nur wenn die stirnseitigen Kanten der Dosenzargen genau in je einer zur Achsrichtung normalen Ebene liegen, lassen sich anschliessend Böden und Deckel störungsfrei und dicht verschliessen.

Bei den bekannten Maschinen der eingangs beschriebenen Gattung lässt sich mit einstellbaren Kupplungen an Antriebsrändern der Förderstränge zwar erreichen, dass die paarweise zusammengehörigen Mitnehmer einander im Bereich der Antriebsräder genau gegenüberliegen; dies bedeutet aber noch nicht unbedingt, dass die Dosenzargen die Schweissvorrichtung in einem Zustand erreichen, in dem ihre Längsränder ohne Längsversatz aneinanderliegen. Es lässt sich nämlich nicht vermeiden, dass die Teilungen der Mitnehmer, das sind die Abstände der aufeinanderfolgenden Mitnehmer voneinander, Fehler aufweisen, die entweder auf Herstellungsungenauigkeiten beruhen oder durch unterschiedliche Dehnungen der Förderstränge im Betrieb entstehen können. Selbst Teilungsfehler in der Grössenordnung von wenigen Zehntelmillimetern können dazu führen, dass die geschweissten Dosenzargen infolge Längsversatz ihrer Längsränder unbrauchbar oder jedenfalls schwer weiterverarbeitbar sind.

Der Erfindung liegt deshalb die Aufgabe zugrunde, eine Maschine der eingangs beschriebenen Gattung derart weiterzubilden, dass auch bei hohen Arbeitsgeschwindigkeiten und starken Belastungen der Förderstränge, insbesondere durch intermittierenden Betrieb, Gewähr dafür besteht, dass die Längsränder der Dosenzargen die Schweissvorrichtung ohne störenden Längsversatz erreichen.

Die Aufgabe ist erfindungsgemäss dadurch gelöst, dass
– die beiden Förderstränge im Betrieb in ihrer Längsrichtung begrenzt gegeneinander verschiebbar sind,
– die Mitnehmer je einen seitlichen Vorsprung haben und
– an der Förderstrecke stromaufwärts von der Schweissvorrichtung in einem Abstand von dieser, der mit der Länge der Dosenzargen mindestens annähernd übereinstimmt, ein paar Justierschablonen, die miteinander starr verbunden sind, mit einem Paar zusammengehöriger Vorsprünge in Eingriff bringbar sind, um diese in einer Richtung quer zur Förderstrecke zwangsweise miteinander in Fluchtung zu bringen.

Die Erfindung beruht auf der Erkenntnis, dass es nicht darauf ankommt, die paarweise zusammengehörigen Mitnehmer im Bereich der Antriebsvorrichtung miteinander fluchtend zu halten, wie dies bei bekannten gattungsgemässen Maschinen vorgesehen ist. Entscheidend ist allein, dass die zusammengehörigen Mitnehmer an einer anderen, mehr oder weniger weit von der Antriebsvorrichtung entfernten Stelle miteinander in Querrichtung fluchten, also in einer gemeinsamen, zur Förderrichtung normalen Ebene angeordnet sind; diese Ebene muss möglichst genau eine Dosenlänge vor der Stelle liegen, an der die Schweissvorrichtung die Längsränder der Dosenzargen miteinander verschweisst. Die erfindungsgemässen Justierschablonen haben nicht die Aufgabe, die Förderstränge anzutreiben; sie sind ausschliesslich dazu da, einen relativen Längsversatz der paarweise zusammengehörigen Mitnehmer zu beseiten, indem sie eine Relativverschiebung der beiden Förderstränge gegeneinander erzwingen. Der Antrieb der Förderstränge ist erfindungsgemäss so beschaffen, dass eine solche Relativverschiebung möglich ist.

Bei einer bevorzugten Ausführungsform der Erfindung sind die Justierschablonen Räder, die in Umfangsrichtung entsprechend den Längsabständen der Mitnehmer Aufnahmen für die Vorsprünge aufweisen und von einem der Förderstränge über eine drehelastische Kupplung antreibbar sind.

Die Justierschablonen können in beliebiger Weise angetrieben werden, wenn nur gewährleistet ist, dass sie jeweils mit einem Paar zusammengehöriger Vorsprünge in Eingriff kommen, wenn diese sich der Stelle nähern, die eine Dosenlänge stromaufwärts von der Schweissvorrichtung liegt. Zu diesem Zweck könnte der Antrieb für die Justierschablonen unmittelbar von einem Motor der Antriebsvorrichtung für die Förderstränge abgeleitet sein. Besonders zweckmässig ist es jedoch, wenn die beiden Justierschablonen durch die drehelastische Kupplung mit einem Zwischenrad verbunden sind, das an einem der Förderstränge abwälzbar ist.

Es ist ferner vorteilhaft, wenn die Antriebsvorrichtung zwei Antriebsräder aufweist, die an je einem der Förderstränge abwälzbar sind, wobei diese beiden Antriebsräder durch eine in Drehrichtung elastische Kupplung miteinander verbunden sind und nur eines der Antriebsräder mit einem Motor starr gekuppelt ist. Die zum Ausgleich von Teilungs- fehlern erforderliche Relativverschiebung der För- derstränge in bezug zueinander lässt sich aber auch dadurch erreichen, dass beide Förderstränge von je einem eigenen Motor angetrieben sind.

Ein Ausführungsbeispiel der Erfindung wird im folgenden anhand schematischer Zeichnungen mit weiteren Einzelheiten erläutert. Es zeigt:

Fig. 1 eine Seitenansicht einer Dosenschweissmaschine,

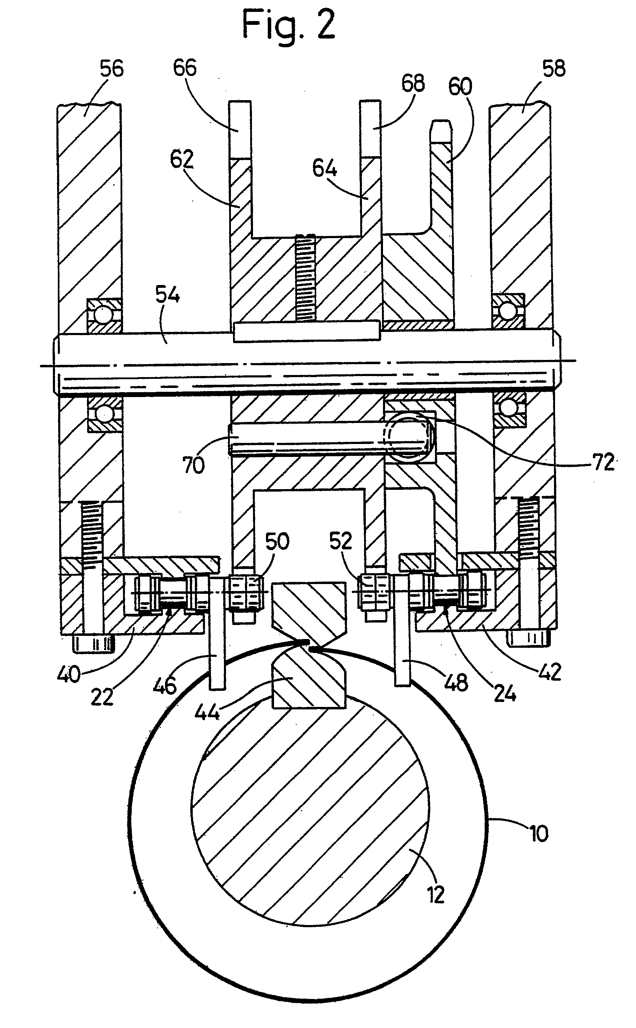

Fig. 2 den Teilquerschnitt II–II in Fig. 1,
Fig. 3 den Teilquerschnitt III–III in Fig. 1 und
Fig. 4a bis 4c Einzelteile aus Fig. 1 in verschiedenen Betriebsstellungen.

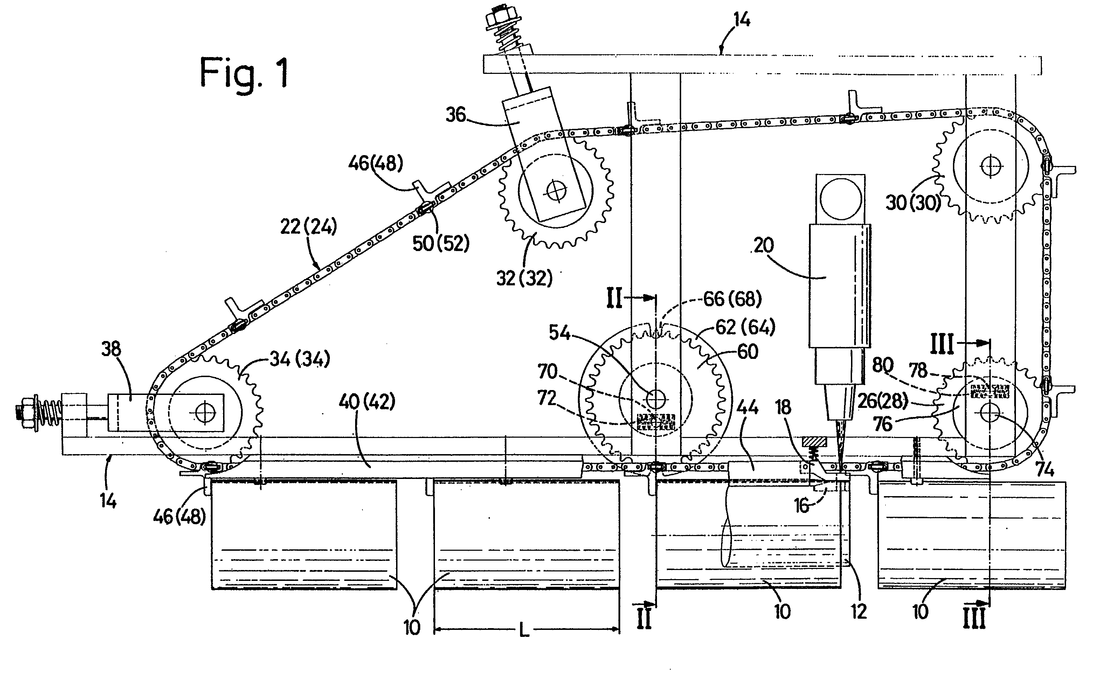

Die dargestellte Dosenschweissmaschine hat die Aufgabe, Dosenzargen 10, die beispielsweise aus Weissblech von 0,2 mm Dicke bestehen, an ihren Längsrändern zu verschweissen. Die Dosenzargen 10 sind von einer nicht dargestellten, vorgeschalteten Rundmaschine um einen in Fig. 1 nur teilweise gezeichneten Schweissarm 12 herum gerollt worden und durchlaufen die Schweissmaschine in Fig. 1 von links nach rechts.

Der Schweissarm 12 ist mit seinem nicht dargestellten linken Ende an einem Maschinengestell 14 befestigt und ragt von diesem freitragend weg, in Fig. 1 nach rechts. Am freien Ende des Schweissarms 12 ist ein unterer Gleitschuh 16 befestigt; diesem ist ein am Maschinengestell 14 schwenkbar gelagerter und nach unten federbelasteter oberer Gleitschuh 18 zugeordnet. Über dem oberen Gleitschuh 18 ist eine ebenfalls am Maschinengestell 14 befestigte Schweissvorrichtung 20 angeordnet, die als Laserkanone dargestellt ist und einen senkrechten Energiestrahl aussendet, der durch miteinander fluchtende Aussparungen der beiden Gleitschuhe 16 und 18 hindurch die Längsränder der Dosenzargen 10 miteinander verschweisst.

Zum Fördern der Dosenzargen 10 sind zwei parallele Förderstränge 22 und 24 vorgesehen, die als Laschenketten dargestellt sind und über je ein Antriebsrad 26 bzw. 28 und über mehrere Umlenkradpaare 30, 32 und 34 laufen. Die Umlenkpaare 32 und 34 sind an je einer federbelasteten Spannvorrichtung 36 bzw. 38 gelagert, wodurch die Förderstränge 22 und 24 stramm gehalten werden.

Oberhalb des Schweissarms 12 sind, auf je einer Seite von dessen senkrechter Längsmittelebene, zwei Gleitführungen 40 und 42 angeordnet, die am Maschinengestell 14 befestigt und so gestaltet sind, dass sie je einen der Förderstränge 22 und 24 nahezu spielfrei führen. An der Oberseite des Schweissarms 12 ist eine Schiene 44 befestigt, deren Profil Z-förmig ist und in den Raum zwischen den Gleitführungen 40 und 42 hineinragt. Die Schiene 44 führt die Längsräder der Dosenzargen 10, die anschliessend miteinander verschweisst werden.

An den beiden als Laschenketten ausgebildeten Förderstränge 22 und 24 sind in gleichmässigen Abständen von im dargestellten Beispiel neuen Kettengliedern Mitnehmer 46 bzw. 48 derart befestigt, dass jedem Mitnehmer 46 des Förderstrangs 22 ein Mitnehmer 48 des Förderstrangs 24 in einer quer zur Längsrichtung der Förderstränge angeordneter Ebene gegenüberliegt. An jedem der Mitnehmer 46 und 48 ist ein seitlicher Vorsprung 50 bzw. 52 angeordnet. Diese Vorsprünge 50 und 52 sind einander in entsprechender Weise wie die sie tragenden Mitnehmer 46 und 48 paarweise zugeordnet und erstrecken sich zueinander hin. Im dargestellten Beispiel sind die Vorsprünge 50 und 52 zylindrische Rollen, die am zugehörigen Förderstrang 22 bzw. 24 um je eine waagerechte Achse drehbar gelagert sind.

Die senkrechte Achse der Schweissvorrichtung 20 und des von ihr ausgesandten Energiestrahls liegt in geringem Abstand förderstromabwärts vom Ende der Gleitführung 40 und 42. Stromaufwärts von dieser Achse, in einem Abstand, der genau mit der Länge L der Dosenzargen 10 übereinstimmt, ist eine waagerechte Welle 54 angeordnet, die sich im rechten Winkel zu den Gleitführungen 40 und 42 oberhalb von diesen erstreckt und in seitlichen Wangen 56 und 58 gelagert ist. Die Wangen 56 und 58 sind am Maschinengestell 14 befestigt und tragen die Gleitführungen 40, 42. Auf der Welle 54 ist ein Zwischenrad 60 gelagert, das als Kettenrad ausgebildet ist und durch eine Aussparung in der Gleitführung 42 hindurch mit dem Förderstrang 24 kämmt.

Neben dem Zwischenrad 60 sind auf der Welle 54 zwei Justierschablonen 62 und 64 befestigt, die aus einem Stück bestehen oder fest miteinander verbunden sind. Jede der Justierschablonen 62 und 64 ist ähnlich einem Kettenrad ausgebildet und weist Aufnahmen 66 bzw. 68 in Form von Randaussparungen auf, deren Umfangsabstände voneinander dem gegenseitigen Abstand, der sogenannten Teilung, aufeinanderfolgender Mitnehmer 46 bzw. 48 entspricht. Die Aufnahmen 66 und 68 der Justiersch- blonen 62 und 64 fluchten paarweise miteinander in einer zur geometrischen Achse der Welle 54 parallelen Richtung und verjüngen sich radial nach innen.

Die beiden Justierschablonen 62 und 64 sind mit dem Zwischenrad 60 durch einen Bolzen 70 und zwei Druckfedern 72 elastisch gekuppelt. Der Bolzen 70 ist an einer gemeinsamen Nabe der Justierschablonen 62 und 64 achsparallel befestigt und endet zwischen den Druckfedern 72 in einer Aussparung des Zwischenrades 60.

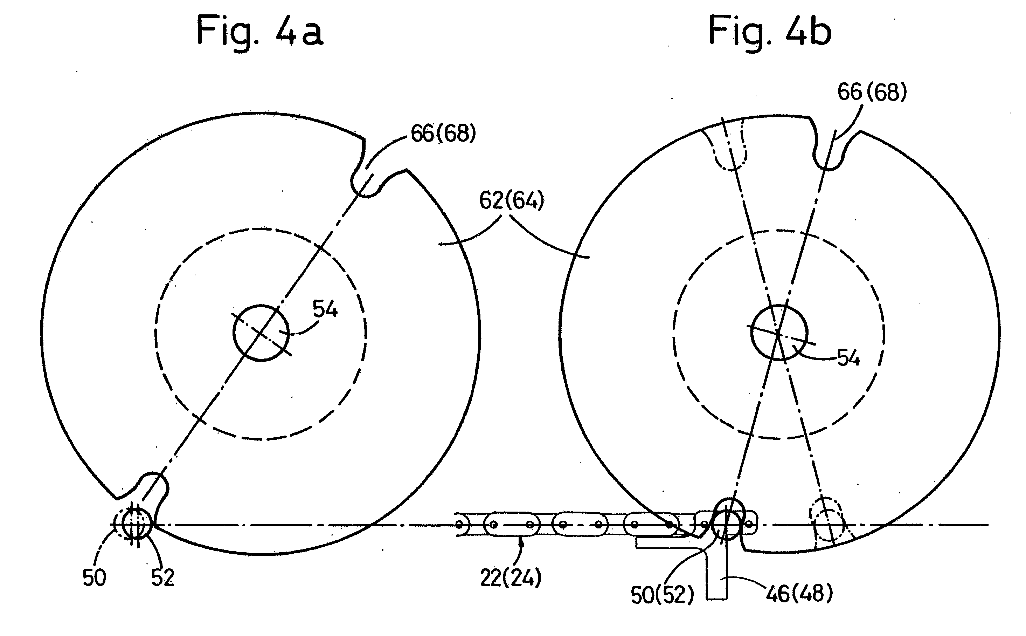

Die Justierschablonen 62 und 64 drehen sich mit dem Zwischenrad 60 jeweils in dem Mass, in dem die Förderstränge 22 und 24 vorwärtsbewegt werden, derart, dass die Aufnahmen 66 und 68 je einen der Vorsprünge 50 bzw. 52 gemäss Fig. 4a sicher erfassen und ihn dann bei weiterer Vorwärtsbewegung der Förderstränge 22 und 24 gemäss Fig. 4b allmählich spielfrei aufnehmen, bis zusammengehörige Vorsprünge 50 und 52 und somit auch die zugehörigen Mitnehmer 46 und 48 in bezug zueinander genau justiert sind.

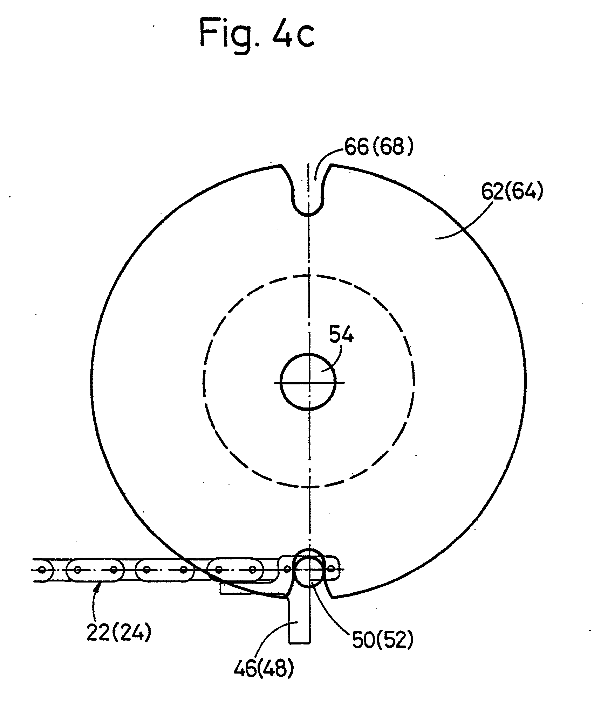

Wenn ein Paar Mitnehmer 46, 48 die Stellung gemäss Fig. 1 und 4c einnimmt, liegt die Vorderkante der Dosenzarge 10, gegen deren Hinterkante diese beiden Mitnehmer drücken, genau in der zu den Gleitführungen 40 und 42 normalen Ebene, in der die Mittelachse der Schweissvorrichtung 20 liegt.

In diesem Augenblick wird damit begonnen, die Längsränder der betreffenden Dosenzarge 10 miteinander zu verschweissen. Bei weiterer fortschreitender Vorwärtsbewegung der beiden Förderstränge 22 und 24 verlassen die beiden genannten Vorsprünge 50 und 52 allmählich die Aufnahme 66 bzw. 68, in denen sie justiert worden sind; dies ist in Fig. 4b mit strichpunktierten Linien angedeutet.

Wenn die beiden Förderstränge 22 und 24 Teilungsfehler aufweisen, verschiebt sich einer der beiden von den Aufnahmen 66 und 68 freigegebenen Vorsprünge 50 und 52 und somit auch die zugehörigen Mitnehmer 46 und 48 wieder gegeneinander; dies ist aber unschädlich, da die Schweissung der betroffenen Dosenzarge 10 nun soweit fortgeschritten ist, dass ihre Längsränder sich nicht mehr gegeneinander verschieben können.

Die beschriebenen Vorgänge wiederholen sich durch Einwirkung der Justierschablonen 62 und 64 auf die folgenden Vorsprünge 50 und 52 mit dem Ergebnis, dass auch die folgende Dosenzarge 10 mit genau aufeinander ausgerichteten Längsrändern in den Arbeitsbereich der Schweissvorrichtung 20 gelangt.

Jede Justierung eines Paars zusammengehöriger Mitnehmer 46 und 48 ist mit einer relativen Längsverschiebung der Förderstränge 22 und 24 in deren an die Justierschablonen 62 und 64 angrenzenden Abschnitten verbunden. Der Antrieb der Förderstränge 22 und 24 muss derart beschaffen sein, dass er diese relative Längsverschiebung ermöglicht.

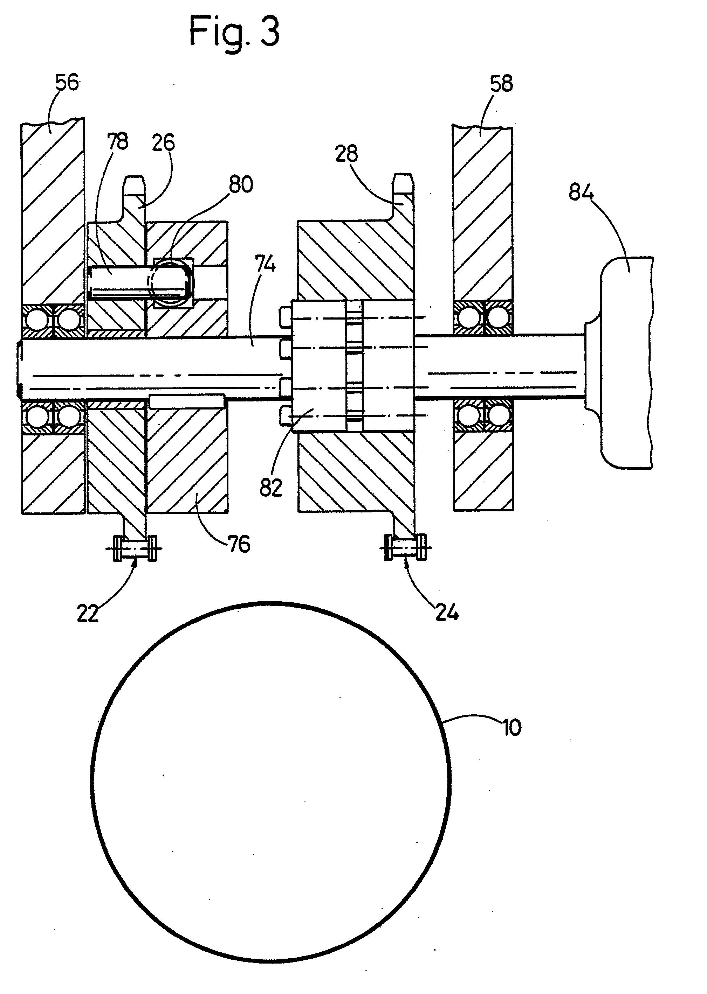

Bei dem dargestellten Ausführungsbeispiel wird dies gemäss Fig. 3 dadurch erreicht, dass das Antriebsrad 26 drehbar auf einer Antriebswelle 74 gelagert ist, auf der ein Nabenkörper 76 befestigt ist. Antriebsrad 26 und Nabenkörper 76 sind durch eine drehelastische Kupplung miteinander verbunden, die entsprechend dem oben beschriebenen von einem Bolzen 78 und einem Paar Druckfedern 80 gebildet ist. Der Bolzen 78 ist am Antriebsrad 26 befestigt und erstreckt sich parallel zu dessen Achse in eine Aussparung des Nabenkörpers 76 hinein, wo er zwischen den Druckfedern 80 endet, die längs einer Sehne des Nabenkörpers 76 angeordnet und an diesem abgestützt sind. Das andere Antriebsrad 28 ist durch eine einstellbare, jedoch im Betrieb starre Kupplung 82 mit der Antriebswelle 74 verbunden, die ihrerseits mit einem Motor 84 verbunden ist.

## Patentansprüche

1. Maschine zum Verschweissen von Längsrändern gerundeter Dosenzargen (10), mit
– zwei endlosen biegsamen Fördersträngen (22, 24), die parallel zueinander über eine Antriebsvorrichtung (26, 28), eine Umlenkvorrichtung (30, 32, 34) und eine Förderstrecke für die Zargen (10) laufen,
– Mitnehmern (46, 48), die an je einem der Förderstränge (22, 24) in gleichen Abständen hintereinander so befestigt sind, dass jedem Mitnehmer (46) an einem Förderstrang (22) ein Mitnehmer (48) an dem anderen Förderstrang (24) gegenüberliegt, damit diese beiden zusammengehörigen Mitnehmer gemeinsam eine Dosenzarge (10) über die Förderstrecke schieben, und
– einer Schweissvorrichtung (20) an der Förderstrecke,
dadurch gekennzeichnet, dass
– die beiden Förderstränge (22, 24) im Betrieb in ihrer Längsrichtung begrenzt gegeneinander verschiebbar sind, – die Mitnehmer (46, 48) je einen seitlichen Vorsprung (50, 52) haben und
– an der Förderstrecke stromaufwärts von der Schweissvorrichtung (20) in einem Abstand von dieser, der mit der Länge der Dosenzargen (10) mindestens annähernd übereinstimmt, ein Paar Justierschablonen (62, 64), die miteinander starr verbunden sind, mit einem Paar zusammengehöriger Vorsprünge (50, 52) in Eingriff bringbar sind, um diese in einer Richtung quer zur Förderstrecke zwangsweise miteinander in Fluchtung zu bringen.

2. Maschine nach Anspruch 1, dadurch gekennzeichnet, dass die Justierschablonen (62, 64) Räder sind, die in Umfangsabständen entsprechend den Längsabständen der Mitnehmer (46, 48) Aufnahmen (66, 68) für die Vorsprünge (50, 52) aufweisen und von einem der Förderstränge (24) über eine drehelastische Kupplung (70, 72) antreibbar sind.

3. Maschine nach Anspruch 2, dadurch gekennzeichnet, dass die beiden Justierschablonen (62, 64) durch die drehelastische Kupplung (70, 72) mit einem Zwischenrad (60) verbunden sind, das an einem der Förderstränge (22, 24) abwälzbar ist.

4. Maschine nach einem der Ansprüche 1 bis 3, deren Antriebsvorrichtung zwei Antriebsräder (26, 28) aufweist, die an je einem der Förderstränge (22, 24) abwälzbar sind, dadurch gekennzeichnet, dass die beiden Antriebsräder (26, 28) durch eine in Drehrichtung elastische Kupplung (78, 80) miteinander verbunden sind und nur eines der Antriebsräder (28) mit einem Motor (84) starr gekuppelt ist.

## Claims

1. A machine for welding the longitudinal edges of rounded can body blanks (10), having
– two endless flexible conveying strands (22, 24) which run, parallel to one another, over a drive mechanism (26, 28), a guide mechanism (30, 32, 34) and a conveying track for the body blanks (10),
– pusher dogs (46, 48) which are each secured to one of the conveying strands (22, 24) one behind the other with equal spacing so that situated opposite each pusher dog (46) on one conveying strand (22) is a pusher dog (48) on the other conveying strand (24) so that these two associated pusher dogs together push a can body blank (10) over the conveying track, and
– A welding apparatus (20) on the conveying track, characterised in that
– the two conveying strands (22, 24) are displaceable to a limited extent in relation to one another in their longitudinal direction, in operation,
– the pusher dogs (46, 48) each have a lateral projection (50, 52) and
– on the conveying track, upstream of the welding apparatus (20), at a distance from this which corresponds at least approximately to the length of the can body blanks (10), a pair of adjusting templates (62, 64), which are rigidly connected to one another, can be brought into engagement with a pair of associated projections (50, 52) in order to bring these forcibly into alignment with one another in a direction transverse to the conveying track.

2. A machine as claimed in claim 1, characterised in that the adjusting templates (62, 64) are wheels which comprise, at circumferential distances apart corresponding to the longitudinal spacing of the pusher dogs (46, 48), receivers (66, 68) for the projections (50, 52) and can be driven by one of the conveying strands (24) through a torsionally resilient coupling (70, 72).

3. A machine as claimed in claim 2, characterised in that the two adjusting templates (62, 64) are connected, by the torsionally resilient coupling (70, 72) to an intermediate wheel (60) which can mesh with one of the conveying strands (22, 24).

4. A machine as claimed in one of the claims 1 to 3, the drive mechanism of which comprises two drive wheels (26, 28) which can each mesh with one of the conveying strands (22, 24), characterised in that the two drive wheels (26, 28) are connected to one another by a coupling (78, 80) which is resilient in the direction of rotation and only one of the drive wheels (28) is rigidly coupled to a motor (84).

**Revendications**

1. Machine à souder les bords longitudinaux des corps de boîte (10) cintrés comportant:
– deux lignes de transport (22, 24) sans fin, flexibles, qui passent, parallèles entre elles, par un dispositif d'entraînement (26, 28), un dispositif de changement de direction (30, 32, 34) et un parcours de transport des corps de boîtes (10),
– des entraîneurs (46, 48) qui sont fixés sur chacune des lignes de transport (22, 24), l'un derrière l'autre, suivant un même espacement, de telle sorte qu'à chaque entraîneur (46) d'une ligne de transport (22) fait face un entraîneur (48) de l'autre ligne de transport (24), afin que ces deux entraîneurs associés poussent ensemble un corps de boîte (10) sur le parcours de transport, et
– un dispositif de soudage (20) placé sur le parcours de transport, caractérisée en ce que:
– les deux lignes de transport (22, 24) peuvent se déplacer l'une vers l'autre pendant leur fonctionnement, de façon limitée en direction longitudinale,
– les entraîneurs (46, 48) présentent chacun une saillie (50, 52) latérale et
– une paire de gabarits d'ajustage qui sont assemblés rigidement entre eux et placés sur le parcours de transport, en amont du dispositif de soudage (20), à une distance de celui-ci correspondant au moins à peu près à la longueur des corps de boîtes (10), peut être mise en prise avec une paire de saillies (50, 52) correspondante afin d'aligner nécessairement celles-ci entre elles, dans une direction perpendiculaire au parcours de transport.

2. Machine selon la revendication 1, caractérisée en ce que les gabarits d'ajustage (62, 64) sont des roues qui présentent des logements (66, 68) pour les saillies (50, 52), à des distances périphériques correspondant aux distances longitudinales des entraîneurs (46, 48), et peuvent être entraînés par l'une des lignes de transport (24), par l'intermédiaire d'un accouplement (70, 72) élastique en rotation.

3. Machine selon la revendication 2, caractérisée en ce que les deux gabarits d'ajustage (62, 64) sont reliés par l'accouplement (70, 72) élastique en rotation, à une roue intermédiaire (60) qui tourne sur l'une des lignes de transport (22, 24).

4. Machine selon l'une des revendications 1 à 3, dont le dispositif d'entraînement comporte deux roues d'entraînement (26, 28) qui tournent sur l'une des lignes de transport (22, 24) caractérisée en ce que les deux roues d'entraînement (26, 28) sont reliées entre elles par un accouplement (78, 80) élastique en rotation, et en ce qu'une seule des roues d'entraînement 28 est accouplée regidement à un moteur (84).

Fig. 1

# Fig. 2

# Fig. 3

Fig. 4a

Fig. 4b

# Fig. 4c